# EUROPEAN PATENT APPLICATION

(11) **EP 2 528 144 A1**
(43) Date of publication of application: **28.11.2012**
(21) Application number: 10843887.0
(22) Date of filing: 22.01.2010
(51) Int. Cl.: H01M 4/02, H01M 4/04, H01M 4/136, H01M 4/58, H01M 4/66

(54) **CATHODE AND METHOD FOR MANUFACTURING THE SAME**

(71) Applicant: Toyota Jidosha Kabushiki Kaisha, Toyota-shi, Aichi 471-8571 (JP)
(72) Inventor: MATSUSHITA, Yuki, Toyota-shi Aichi 471-8571 (JP); SATO, Takayasu, Toyota-shi Aichi 471-8571 (JP); IMAMURA, Yuichiro, Toyota-shi Aichi 471-8571 (JP)
(74) Representative: TBK
(86) International application number: PCT/JP2010/050850
(87) International publication number: WO 2011/089722

(57) **Abstract**

Disclosed is a battery cathode (30) that has a structure in which an active material layer (20) is held by a cathode collector (10). The cathode collector (10) is provided with: a metal base (12) which makes up the main body portion of the cathode collector (10); and a hydrophilic film (14) which is formed on the surface of the metal base (12) and is more hydrophilic than the surface of the metal base (12), and which is formed from a carbide or oxide having at least one constituent element selected from the group composed of tungsten, tantalum, hafnium, niobium, molybdenum, and vanadium, or has a hydrophilic surface formed from carbon. The cathode active material layer (20) has an uncompressed density of 0.9 g/cm³ to 1.5 g/cm³ and is formed on the hydrophilic film (14) of the cathode collector (10).

## Description

### Technical Field

The present invention relates to a cathode for use as a battery component, and a method for manufacturing the cathode.

### Background Art

In recent years, a lithium ion battery, a nickel hydrogen battery, and other secondary batteries have been growing in importance as on-vehicle power sources, or power sources for personal computers and portable terminals. Particularly, the lithium secondary battery which is light in weight, and capable of providing a high energy density is expected as the one to be preferably used as an on-vehicle high-output power source. This kind of the secondary battery in one typical configuration has an electrode configured such that a material capable of reversibly occluding and releasing lithium ions (electrode active material) is held by a conductive member (electrode collector). For example, as typical examples of the electrode active material for use in a cathode (cathode active material), there are exemplified oxides containing lithium, and one, or two or more transition metal elements as constituent metal elements. Further, as typical examples of the electrode collector for use in a cathode (cathode collector), mention may be made of sheet-like or foil-like members mainly formed of aluminum or aluminum alloy.

For manufacturing a cathode having such a configuration, as one of typical methods for allowing a cathode collector to hold a cathode active material, mention may be made of the following method: a paste-like or slurry-like active material layer forming material (which is hereinafter referred to as an active material paste) containing a powder of a cathode active material dispersed in a proper solvent is coated on the cathode collector, and this is dried; this results in the formation of a cathode active material-containing layer (cathode active material layer). Further, the cathode active material layer formed in this manner is low in adhesion between the cathode active material layer and the cathode collector. Accordingly, the cathode active material layer may float or may be peeled off from the cathode collector, and hence is subjected to a pressing treatment (e.g., a roll pressing treatment). Thus, the following becomes necessary: by the pressing treatment, the cathode active material layer is press-fixed to the cathode collector; this increases the junction strength between the cathode active material layer and the cathode collector. As the related art technology regarding this kind of electrode manufacturing, mention may be made of, for example, Patent Literature 1 to Patent Literature 6.

### Citation List

### Patent Literature

Patent Literature 1: Japanese Patent Application Laid-open No. 2009-134988
Patent Literature 2: Japanese Patent Application Laid-open No. 2008-108649
Patent Literature 3: Japanese Patent Application Laid-open No. 2007-103041
Patent Literature 4: Japanese Patent Application Laid-open No. 2001-332246
Patent Literature 5: Japanese Patent Application Laid-open No. H10-261415
Patent Literature 6: Japanese Patent Application Laid-open No. 2003-007302

However, when the cathode active material layer is pressed as described above, the pores in the cathode active material layer are crushed, resulting in reduction of the permeability of the electrolytic solution into the cathode active material layer. When charging and discharging are performed in that state, there is present the cathode active material which cannot contribute to charging and discharging in the electrolytic solution-deficient portion. This results in the reduction of the usage rate of the cathode active material, which may cause the capacity deterioration of the lithium secondary battery. Further, transfer /diffusion of lithium ions during rapid charging and discharging is inhibited due to the insufficient permeation of the electrolytic solution. This may result in the reduction of the high-rate discharging performance.

### Summary of Invention

The present invention was completed in view of such circumstances. A main object thereof is to provide a battery cathode including a cathode active material layer high in permeability of an electrolytic solution thereinto, and good in adhesion with the cathode collector. Further, another object thereof is to provide a method for suitably manufacturing a battery cathode having such performances.

In accordance with the present invention, there is provided a battery cathode having a structure in which a cathode active material layer containing a cathode active material is held on a cathode collector. The cathode collector includes: a metal base forming a main body portion of the cathode collector; and a film formed on a surface of the metal base, and having greater hydrophilicity than that of the metal base surface, the film being a hydrophilic film formed of a carbide or an oxide including at least one selected from the group consisting of tungsten, tantalum, hafnium, niobium, molybdenum, and vanadium as a constituent element, or a hydrophilic film formed of carbon, and having a hydrophilic surface. Then, on the hydrophilic film of the cathode collector, a cathode active material layer having an uncompressed density of 0.9 g/cm³ to 1.5 g/cm³ is formed.

With the battery cathode in accordance with the present invention, on the hydrophilic film formed on the metal base, the cathode active material layer is formed. This can make good the adhesion (junction strength) between the cathode active material layer and the cathode collector. Further, on the hydrophilic film of the cathode collector, there is formed the cathode active material layer having an uncompressed density of 0.9 g/cm³ to 1.5 g/cm³. Such an uncompressed cathode active material layer has a low density. The number of pores in the cathode active material layer is large. Accordingly, the electrolytic solution sufficiently permeates into every corner of the cathode active material layer. For this reason, it is possible to suppress the reduction of the usage rate of the cathode active material due to the insufficient permeation of the electrolytic solution, and to improve the battery capacity. Further, it is possible to suppress an increase in transfer / diffusion resistance of lithium ions due to the insufficient permeation of the electrolytic solution, and to improve the high-rate discharging performance.

The density of the cathode active material layer may be desirably set at about 0.9 g/cm³ to 1.5 g/cm³. When the density of the cathode active material layer is too large, the pores in the cathode active material layer are reduced, and the permeability of the electrolytic solution into the cathode active material layer is reduced. These may cause the capacity deterioration of the battery, and the like. Further, the reduction of the electrolytic solution permeability inhibits the transfer /diffusion of lithium ions during rapid charging and discharging. Accordingly, the high-rate discharging performance may be reduced. On the other hand, when the density of the cathode active material layer is too small, the filling density of the cathode active material contained in the cathode active material layer is reduced. Accordingly, the energy density of the battery formed using the cathode may tend to be reduced. Therefore, the density of the cathode active material layer may be set at roughly about 0.9 g/cm³ to 1.5 g/cm³.

Whether the cathode active material layer was subjected to compression (pressing) or not can be confirmed by, for example, measuring the surface roughness (Ra) of the cathode active material layer. For example, the fact that the cathode active material layer herein disclosed is an uncompressed cathode active material layer can be confirmed by the following fact: the surface roughness (Ra) of the cathode active material layer is 3 µm or more (e.g., 3 µm to 5 µm, preferably, further 5 µm or more). The surface roughness (Ra) may be grasped by the cross-sectional image analysis of the cathode active material layer by, for example, a scanning electron microscope (SEM).

As the material for the hydrophilic film of the cathode collector, there is preferably used a carbide or an oxide containing, as a constituent element, at least one selected from the group consisting of tungsten, tantalum, hafnium, niobium, molybdenum, and vanadium. The materials are higher in "wettability" to the active material paste than to the metal base (herein, aluminum foil). For this reason, even when the active material paste is coated on the hydrophilic film made of each of the materials, it is wetly and uniformly coated on the cathode collector (hydrophilic film) without being repelled by the hydrophilic film. This avoids the state in which the cathode active material layer obtained after drying partially floats or is peeled off from the cathode collector. As a result, it is possible to make good the adhesion between the cathode active material layer and the cathode collector. Further, the materials each have a high conductivity. For this reason, even when a hydrophilic film formed of the material is provided on the surface of the cathode collector, the surface resistance of the cathode collector (the resistance formed between it and the cathode active material layer) can be reduced to keep good the conductivity between the cathode active material layer and the cathode collector.

In preferable one mode of the battery cathode herein disclosed, the hydrophilic film is formed of a first hydrophilic film formed on the metal base, and a second hydrophilic film formed on the first hydrophilic film. In this case, the second hydrophilic film is preferably a material having a higher conductivity than that of the first hydrophilic film. For example, the first hydrophilic film is a hydrophilic film formed of a carbide or an oxide of tungsten. The second hydrophilic film is a hydrophilic film formed of carbon, and having a hydrophilic surface. This can reduce the surface resistance of the cathode collector (the resistance formed between it and the cathode active material layer). As a result, it is possible to make good the conductivity between the cathode collector and the cathode active material layer. Whereas, the first hydrophilic film is preferably a material exhibiting a greater adhesion (junction strength) to the metal base (e.g., aluminum foil) than the second hydrophilic film. When, on the metal base, the second hydrophilic film (e.g., carbon film) is tried to be directly formed, there may be the case where the adhesion is low, and a sufficient junction strength cannot be obtained. However, by interposing the first hydrophilic film (e.g., tungsten carbide film) therebetween, it is possible to form a second hydrophilic film (e.g., carbon film) in a firm close contact manner on the metal base.

In one preferable mode of the battery cathode herein disclosed, the metal base included in the cathode collector is formed of aluminum or aluminum alloy. The metal base formed of aluminum or aluminum alloy is low in "wettability" to an active material paste containing a polar solvent (such as water or N-methyl pyrrolidone). For this reason, the following effect of the present invention can be particularly well exerted: on the metal base, a hydrophilic film is formed; thereafter, an active material paste is coated, thereby to form a cathode active material layer good in adhesion.

Further, in accordance with the present invention, there is provided a method for suitably manufacturing the battery cathode. The manufacturing method is a method for manufacturing a battery cathode having a structure in which a cathode active material layer containing a cathode active material is held on a cathode collector. The cathode collector, includes: a metal base forming a main body portion of the cathode collector; and a film formed on a surface of the metal base, and having greater hydrophilicity than that of the metal base surface, the film being a hydrophilic film formed of a carbide or an oxide including at least one selected from the group consisting of tungsten, tantalum, hafnium, niobium, molybdenum, and vanadium as a constituent element, or a hydrophilic film formed of carbon, and having a hydrophilic surface. Then, the manufacturing method of the present invention includes a step of forming the hydrophilic film on the surface of the metal base, and a step of coating an active material paste containing a polar solvent on the hydrophilic film of the cathode collector, and drying the same, thereby forming a cathode active material layer having an uncompressed density of 0.9 g/cm³ to 1.5 g/cm³.

With the cathode manufacturing method in accordance with the present invention, on the surface of the metal base, a hydrophilic film is formed. Thereafter, on the hydrophilic film, an active material paste is coated. For this reason, the active material paste is not repelled by the hydrophilic film, and becomes likely to agree with the top of the cathode collector (hydrophilic film). This avoids the state in which the cathode active material layer obtained after drying partially floats or is peeled off from the cathode collector. Thus, it is possible to make good the adhesion between the cathode active material layer and the cathode collector. Further, in accordance with the present invention, the formation of the hydrophilic film on the metal base can provide a cathode active material layer having good adhesion. Accordingly, the pressing step as in the related art can be omitted to form a cathode active material layer. Namely, it is possible to form a cathode active material layer having an uncompressed density of 0.9 g/cm³ to 1.5 g/cm³. In this case, the pressing step can be omitted. Accordingly, it is possible to make the manufacturing line compact. Further, it is possible to resolve the defective conditions such as uneven density, or damages of the cathode active material layer occurring during the pressing step.

In preferable one mode of the manufacturing method herein disclosed, on the surface of the metal base, an oxide film of the metal is previously formed. The method includes, before a step of forming the hydrophilic film, a step of removing the metal oxide film formed on the surface of the metal base. The presence of the metal oxide film on the surface of the metal base results in an increase in resistance between the metal base and the hydrophilic film. This may impair the conductivity between the metal base and the hydrophilic film. However, in accordance with the method, the metal oxide film formed on the metal base is removed to expose the metal surface of the underlayer. On the exposed solid metal base, the hydrophilic film is formed in a direct contact manner. Accordingly, it is possible to make better the conductivity between the metal base and the hydrophilic film than with interposition of the metal oxide film therebetween.

In preferable one mode of the manufacturing method herein disclosed, the metal oxide film is removed by physical etching. As a result, it is possible to remove the metal oxide film with efficiency. In preferable one mode of the manufacturing method herein disclosed, the hydrophilic film is formed by physical vapor deposition or chemical vapor deposition. As a result, it is possible to form the hydrophilic film with efficiency.

In preferable one mode of the manufacturing method herein disclosed, the step of forming the hydrophilic film includes a step of forming a first hydrophilic film on the metal base, and a step of forming a second hydrophilic film on the first hydrophilic film. For example, desirably, as the first hydrophilic film, a hydrophilic film formed of a carbide or an oxide of tungsten is formed, and as the second hydrophilic film, a hydrophilic film formed of carbon, and having a hydrophilic surface is formed.

In accordance with the present invention, further, there is provided a battery herein disclosed (e.g., lithium secondary battery) constructed using any cathode herein disclosed (which can be a battery cathode obtained by any cathode manufacturing method herein disclosed.). Such a battery is, as described above, constructed using a cathode including a cathode active material layer high in electrolytic solution permeability, and good in adhesion. Accordingly, it is possible to provide a battery which satisfies at least one of exhibiting more excellent battery performances (e.g., being less in capacity deterioration, being low in internal resistance, being good in high-rate discharging performance, being high in durability, and being good in productivity).

Such a battery is suitable as a battery to be mounted in a vehicle such as a car. Therefore, in accordance with the present invention, there is provided a vehicle including any battery herein disclosed (which can be in a form of assembled battery including a plurality of batteries connected to one another.). Particularly, suitable is a vehicle (e.g., car) adopting a lithium secondary battery (typically, lithium ion battery) as the battery, and using the lithium secondary battery as the power source (typically, the power source of a hybrid vehicle or an electric vehicle) because it is light in weight, and can provide a high capacity.

### Brief Description of Drawings

FIG. 1 is a view showing a manufacturing flow of a cathode in accordance with one embodiment of the present invention;
FIG. 2A is a step cross-sectional view schematically showing a manufacturing step of the cathode in accordance with one embodiment of the present invention;
FIG. 2B is a step cross-sectional view schematically showing a manufacturing step of the cathode in accordance with one embodiment of the present invention;
FIG. 2C is a step cross-sectional view schematically showing a manufacturing step of the cathode in accordance with one embodiment of the present invention;
FIG. 3A is a step cross-sectional view schematically showing a manufacturing step of the cathode in accordance with one embodiment of the present invention;
FIG. 3B is a step cross-sectional view schematically showing a manufacturing step of the cathode in accordance with one embodiment of the present invention;
FIG. 4 is a cross-sectional view schematically showing a cross-section configuration of the cathode in accordance with one embodiment of the present invention;
FIG. 5 is a cross-sectional view schematically showing a cross-section configuration of a cathode in accordance with another embodiment of the present invention;
FIG. 6A is a cross-sectional view schematically showing a cross-section configuration of a cathode collector in accordance with Embodiment 1;
FIG. 6B is a cross-sectional view schematically showing a cross-section configuration of a cathode collector in accordance with Embodiment 2;
FIG. 6C is a cross-sectional view schematically showing a cross-section configuration of a cathode collector in accordance with Comparative Example 1;
FIG. 6D is a cross-sectional view schematically showing a cross-section configuration of a cathode collector in accordance with Comparative Example 2;
FIG. 7 is a graph showing the results (contact angle) of a wettability test in accordance with a cathode of each example;
FIG. 8 is a view for illustrating a method for measuring the electric resistance value in accordance with the cathode of each example;
FIG. 9 is a characteristic view showing the relationship between the battery resistance value and the contact angle of the cathode of each example;
FIG. 10 is a characteristic view showing the relationship between the density of the cathode active material layer and the battery resistance value of each example;
FIG. 11 is a schematic view schematically showing a test battery of each example;
FIG. 12 is a characteristic view showing the relationship between the discharge capacity and the contact angle in accordance with the test battery of each example;
FIG. 13 is a graph showing the discharge capacity in accordance with the test battery of each example;
FIG. 14 is a view schematically showing a lithium secondary battery in accordance with one embodiment of the present invention;
FIG. 15 is a view schematically showing an electrode body of the lithium secondary battery in accordance with one embodiment of the present invention; and
FIG. 16 is a side view schematically showing a vehicle including a lithium secondary battery in accordance with one embodiment of the present invention.

### Description of Embodiments

Below, embodiments in accordance with the present invention will be described referring to the accompanying drawings. In the following drawings, members / parts exerting the same function are given the same reference numerals. Incidentally, the dimensional relationships (length, width, thickness, and the like) in each drawing do not reflect the actual dimensional relationships. Further, matters other than matters particularly mentioned in this description, and which are necessary for carrying out the present invention, (e.g., methods for manufacturing an electrode active material, configurations and manufacturing methods of a separator and an electrolyte, and general techniques in accordance with constructions of lithium secondary batteries and other batteries, and the like) can be understood as design matters of those skilled in the art based on related art technologies in the field.

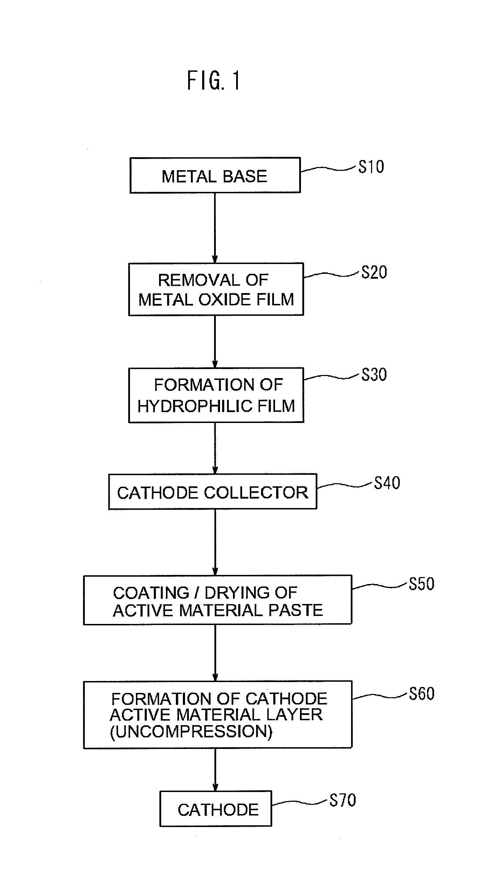

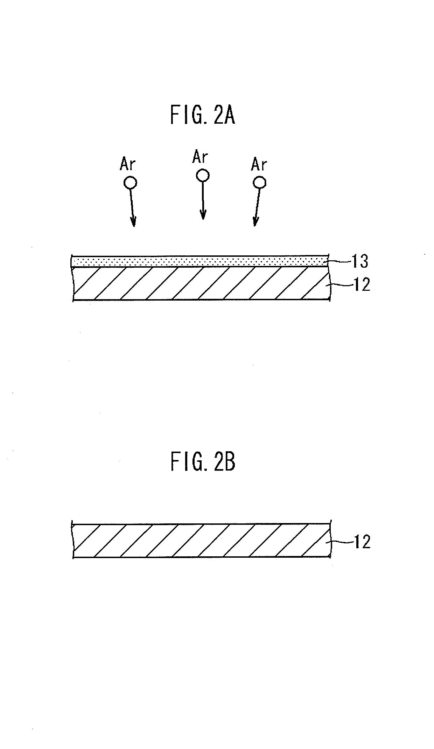

Although not intended to be particularly limited, below, the present invention will be described in details referring to the flowchart shown in FIG. 1 and the step cross-sectional views of FIGS. 2A to 2C by mainly taking the case of manufacturing a cathode for a lithium secondary battery (typically, a lithium ion battery) having a foil-like metal base made of aluminum (aluminum foil) as an example.

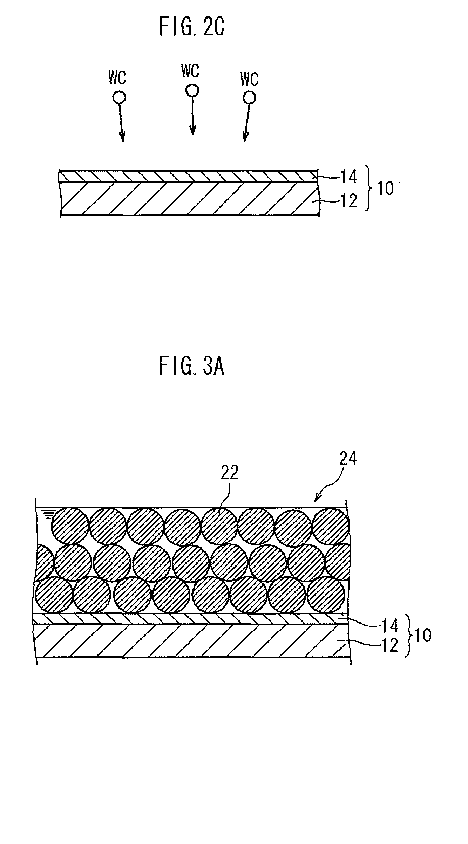

As shown in FIG. 1, with a method for manufacturing a cathode for a lithium secondary battery herein disclosed, as a metal base, aluminum foil with a thickness of, for example, about 10 µm to 30 µm is prepared (Step S10), and a metal oxide film (aluminum oxide film) formed on the surface of the base is removed (Step S20). The aluminum foil is oxidized immediately upon exposure to atmosphere in terms of characteristics, and hence normally has an oxide film on the surface. For example, as shown in FIG. 2A, on the surface of aluminum foil 12, a thin oxide film 13 with a thickness of about 5 nm to 10 nm is formed. In the present embodiment, first, the oxide film 13 formed on the surface of the aluminum foil 12 is removed, thereby to expose the metal surface made of aluminum of underlayer as shown in FIG. 2B. Then, as shown in FIG. 2C, on the exposed solid metal base 12, a hydrophilic film 14 is directly formed.

The method for removing an oxide film on the base (aluminum foil) surface has no particular restriction, and is preferably performed by physical etching with ions of an inert gas (e.g., Ar gas). As the physical etching with ions of an inert gas, mention may be made of plasma etching or sputtering ion beam etching. Such physical etching with ions of an inert gas is performed, typically, under reduced pressure conditions (e.g., in an inert gas atmosphere under a pressure of about 0.01 Pa to 100 Pa, or in a mixed gas atmosphere of an inert gas and a reactive gas). As the method for removing the oxide film on the base (aluminum foil) surface in the technology herein disclosed, there can be preferably adopted, for example, a method for performing physical etching by sputtering.

The thus exposed surface of the metal base 12 made of aluminum is low in "wettability" to an active material paste containing a polar solvent (e.g., water or N-methyl pyrrolidone (NMP)). For this reason, when an active material paste is coated on the surface of the metal base 12, it is repelled by the base surface, and is less likely to agree with the top of the cathode collector (metal base). This results in insufficient adhesion (junction strength) to the base surface of the cathode active material layer obtained after drying. As a result, the cathode active material layer may become more likely to partially float or peeled off from the cathode collector. With the manufacturing method of the present embodiment, a hydrophilic film having a high wettability to the active material paste is formed on such a surface of the metal base 12. Thereafter, an active material paste is provided on the hydrophilic film. This results in the cathode active material layer with good adhesion (high junction strength).

Namely, as shown in FIGS. 1 and 2C, with the method for manufacturing a cathode in accordance with the present embodiment, subsequently to the step S20 of removing the oxide film, a hydrophilic film 14 is formed on the surface of the metal base 12 (Step S30 shown in FIG. 1).

As the hydrophilic film of the cathode collector, there is preferably used a carbide or an oxide including, as a constituent element, at least one selected from the group consisting of tungsten, tantalum, hafnium, niobium, molybdenum, and vanadium. For example, examples of tungsten carbide include WC and W₃C. Examples of tungsten oxide include WO₃ and W₂C₃. Examples of tantalum carbide include TaC. Examples of tantalum oxide include TaO₂. Examples of hafnium carbide include HfC. Examples of hafnium oxide include HfO₂. Examples of niobium carbide include Nb₂C and NbC. Examples of niobium oxide include NbO and Nb₂C₅. Examples of vanadium carbide include VC. Examples of vanadium oxide include VO, VO₃, and V₂C₃. The materials are higher in wettability to the active material paste than the surface of the metal base (herein, aluminum). For this reason, even when the active material paste is coated on the hydrophilic film made of each of the materials, it is wetly and uniformly coated on the cathode collector (hydrophilic film) without being repelled by the hydrophilic film. This avoids the state in which the cathode active material layer obtained after drying partially floats or is peeled off from the cathode collector. As a result, it is possible to make good the adhesion between the cathode active material layer and the cathode collector.

Further, the materials each have a high conductivity. For this reason, even when a hydrophilic film formed of the material is formed on the surface of the cathode collector, the surface resistance of the cathode collector (the resistance formed between it and the cathode active material layer) can be reduced to keep good the conductivity between the cathode active material layer and the cathode collector. The conductivities of the hydrophilic films are, for example, 17 uΩ·cm for tungsten carbide (WC), 0.31 uΩ·cm for tantalum carbide (TaC), 0.26 uΩ·cm for hafnium carbide (HfC), 0.10 uΩ·cm for niobium carbide (NbC), 0.09 uΩ·cm for molybdenum carbide (Mo₂C), and 0.05 uΩ·cm for vanadium carbide (VC). Further, the conductivities are 88 uΩ·cm for tungsten oxide (WO₃), 0.92 uΩ·cm for tantalum oxide (Ta₂O₅), 1.01 uΩ·cm for hafnium oxide (HfO₂), 0.83 uΩ·cm for niobium oxide (NbO), 0.78 uΩ·cm for molybdenum oxide (MoO₃), and 1.11 uΩ·cm for vanadium oxide (VO).

As the methods for forming such a hydrophilic film on the base surface, there can be preferably adopted known vapor deposition methods such as physical vapor deposition method (PVD method such as sputtering method) and chemical vapor deposition method (CVD method such as plasma CVD method). The formation of the hydrophilic film by such a vapor deposition method (vapor deposition of the hydrophilic film) is typically performed under reduced pressure conditions (e.g., in an inert gas atmosphere under a pressure of about 0.01 Pa to 100 Pa, in a mixed gas atmosphere of an inert gas and a non-oxidizing gas or in an air atmosphere). As the method for forming a hydrophilic film on the base surface in the technology herein disclosed, there can be preferably adopted a sputtering method using the material substance of the hydrophilic film as a target.

The thickness of the hydrophilic film has no particular restriction so long as it is a thickness to such a degree as to be able to uniformly cover the base. For example, the thickness of the hydrophilic film can be set at about 10 nm to 100 nm, and in general, is preferably set at about 10 nm to 20 nm. When the thickness of the hydrophilic film is too large, the energy density of the battery formed using the cathode may tend to be reduced, or the strength of the hydrophilic film may tend to be insufficient. Incidentally, the thickness of the hydrophilic film can be arbitrarily controlled by adjusting the formation conditions (e.g., vapor deposition conditions) of the hydrophilic film.

Further, the range (region) in which the hydrophilic film is formed of the base surface is preferably set so as to at least include the range in which an active material paste described later is provided. For example, when the active material paste is applied to only one side (which may be a part of the one side, or may be the whole range thereof) of the foil-like base, there can be preferably adopted the mode in which the hydrophilic film is formed over the whole range of the one side. Whereas, when the active material paste is applied on both sides of the base, there can be preferably adopted the mode in which the hydrophilic film is formed over the whole range of the one side.

By forming the hydrophilic film 14 in this manner, it is possible to obtain a cathode collector 10 including the hydrophilic film 14 provided on the surface of the base 12 of aluminum foil (e.g., the whole ranges of both sides of the aluminum foil) (Step S40 shown in FIG. 1). Therefore, the steps S10 to S40 up to this point can be understood as the process for manufacturing the cathode collector or the steps for preparing (manufacturing) the cathode collector.

Thus, the cathode collector 10 is manufactured. Then, as shown in FIG. 3A, the active material paste 24 containing the cathode active material 22 is coated from above the tungsten carbide layer 14 onto the cathode collector 10 (Step S50 shown in FIG. 1).

The active material paste is a paste-like or slurry-like electrode mixture obtained in the following manner: a powder of a cathode active material and other cathode active material layer forming components (e.g., a conductive material and a binder) to be used, if required, are dispersed (typically dissolved) in an appropriate disperse medium, followed by kneading. The active material paste is preferably an aqueous paste using an aqueous medium as the disperse medium from various viewpoints of reduction of the environmental load, the reduction of the material cost, the simplification of the facility, the reduction of wastes, the improvement of handling property thereof, and the like.

As the aqueous medium, water, or a mixed solvent mainly including water is preferably used. As solvent components forming such a mixed solvent other than water, one, or two or more of organic solvents (such as lower alcohols and lower ketones) which can be uniformly mixed with water can be appropriately selected, and used. For example, preferred is the use of an aqueous solvent in which 80 mass% or more (more preferably 90 mass% or more, further preferably 95 mass% or more) of the aqueous solvent is water. As particularly preferred example, mention may be made of an aqueous solvent substantially made of water. Alternatively, the disperse medium is not limited to an aqueous solvent, and may be a non-aqueous solvent. As the non-aqueous solvents, for example, there can be used polar solvents such as N-methyl pyrrolidone (NMP).

As the cathode active materials, one, or two or more of the substances conventionally used for a lithium secondary battery can be used without particular restriction. As the preferable object to which the technology herein disclosed is applied, mention may be made of compounds represented by the following general formula:

LiMAO₄ (1)

M in such a formula represents one, or two or more elements including at least one metal element selected from the group consisting of Fe, Co, Ni, and Mn (typically, one, or two or more metal elements). Namely, at least one metal element selected from the group consisting of Fe, Co, Ni, and Mn is contained, and there is allowed the presence of other minor additive elements which may be contained in small amounts (such minor additive elements may not be present). Further, A in the formula represents one, or two or more elements selected from the group consisting of P, Si, S, and V.
This kind of polyanion type compounds (typically, compounds having an olivine structure) are high in theoretical energy density, and can avoid or reduce the use of expensive metal materials, and hence are preferable. In the formula (1), those in which A is P and/or Si (e.g., LiFePO₄, LiFeSiO₄, LiCoPO₄, LiCoSiO₄, LiFe_{0.5}Co_{0.5}PO₄, LiFe_{0.5}Co_{0.5}SiO₄, LiMnPO₄, LiMnSiO₄, LiNiPO₄, and LiNiSiO₄) may be mentioned as particularly preferable polyanion type compounds. Especially, the present invention is preferably applied to a cathode active material containing a lithium-containing olivine type phosphoric acid compound, particularly, a lithium-containing iron phosphate compound (e.g., LiFePO₄) as a main component (typically, a cathode active material substantially formed of a lithium-containing iron phosphate compound). Alternatively, mention may be made of lithium-containing layered or spinel type transition metal oxide (lithium transition metal oxide) such as lithium nickel oxide (LiNiO₂), lithium cobalt oxide (LiCoO₂), or lithium manganese oxide (LiMn₂O₄). Out of these, the present invention is preferably applied to a cathode active material containing lithium nickel cobalt manganese composite oxide (e.g., LiNi_{1/3}Co_{1/3}Mn_{1/3}O₂) as a main component.

The active material paste can contain, if required, one, or two or more materials (other cathode active material layer forming components) to be used for a paste for forming the cathode active material layer in manufacturing of a general cathode other than the cathode active material and the disperse medium. Typical examples of such a material may include a conductive material and a binder. As the conductive materials, there can be used carbon powders such as carbon black (acetylene black, or the like), conductive metal powders such as nickel powder, and the like. Whereas, as the binders, there can be used polymers such as carboxymethyl cellulose (CMC), polytetrafluoroethylene (PTFE), polyvinylidene fluoride (PVDF), polyvinylidene fluoride-hexafluoropropylene copolymer (PVDF-HFP), and styrene butadiene rubber (SBR).

Although not particularly restricted, the solid content concentration of the active material paste (the ratio of non-volatile matters, i.e., the cathode active material layer forming components) can be, for example, about 40 mass% to 60 mass%. The content ratio of the cathode active material based on the amount of the solid content (i.e., the cathode active material layer forming components) is preferably at least about 50 mass%, and can be, for example, about 75 mass% to 99 mass%. In general, this ratio is properly set at about 80 mass% to 95 mass%. For the composition containing a conductive material, it is possible to achieve the composition containing the cathode active material in a ratio of about 80 mass% to 90 mass%, and a conductive material in a ratio of about 5 mass% to 15 mass%.

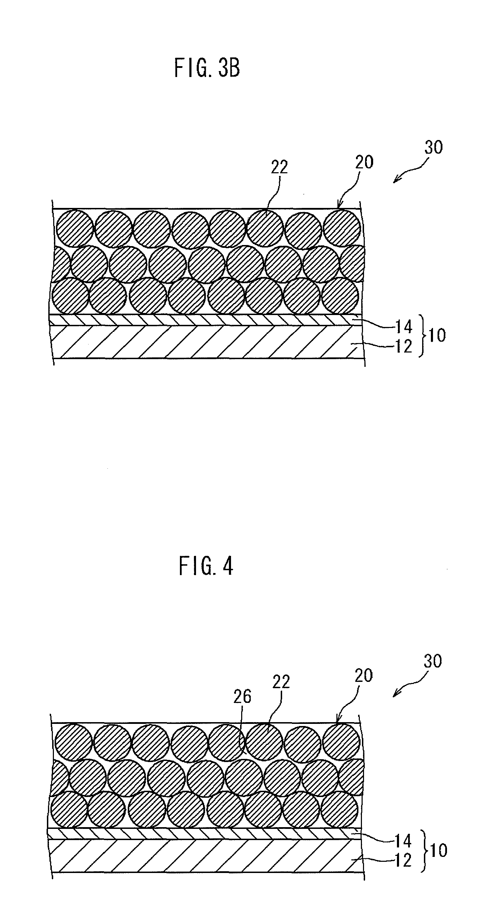

The operation of applying (typically, coating) such an active material paste 24 onto the cathode collector 10, can be performed in the same manner as manufacturing of the cathode of a conventional general lithium secondary battery, except that as the cathode collector 10, the one including the hydrophilic film 14 provided on the surface thereof is used as described above. Manufacturing can be achieved in the following manner. For example, using an appropriate coating device (a slit coater, a die coater, a comma coater, or the like), from above the hydrophilic film, a prescribed amount of the active material paste is coated in a layer onto the cathode collector. After coating, the coated matter is dried (typically, at 70°C to 200°C) by an appropriate drying means. As a result, as shown in FIG. 3B, on the surface of the cathode collector 10, the cathode active material layer 20 is formed.

Herein, with a conventional method in which a hydrophilic film is not formed on the surface of the metal base (aluminum foil), an active material paste is directly coated on the cathode collector (aluminum foil), followed by drying. As a result, a cathode active material layer is formed. The cathode active material layer formed in this manner is low in adhesion. Thus, the cathode active material layer may partially float or peeled off from the cathode collector. Therefore, a pressing treatment is required to be performed to enhance the adhesion (junction strength) between the cathode active material layer and the cathode collector.

In contrast, in the present embodiment, on the metal base 12, the hydrophilic film 14 is formed. Thereafter, on the hydrophilic film 14, the active material paste 24 is coated, resulting in the cathode active material layer 20 good in adhesion. Accordingly, the pressing step as in the related art can be omitted, thereby to form a cathode active material layer. Namely, in accordance with the present embodiment, on the hydrophilic film of the cathode collector, the active material paste is coated and dried. As a result, it is possible to form the uncompressed low-density cathode active material layer 20 (Step S60 shown in FIG. 1). In this case, the pressing step can be omitted to manufacture a cathode. Accordingly, it is possible to make the manufacturing line compact. Further, it is possible to resolve the defective conditions such as uneven density or damages of the cathode active material layer occurring during the pressing step. Thus, manufacturing of the cathode 30 in accordance with the present embodiment is completed.

FIG. 4 schematically shows the cross-section structure of the cathode for lithium secondary battery preferably manufactured by applying the cathode manufacturing method herein disclosed. The cathode 30 has a structure in which the cathode active material layer 20 containing the cathode active material 22 is held by the cathode collector 10. The cathode collector 10 includes a metal base (aluminum foil) 12 forming the main body portion of the cathode collector, and a hydrophilic film 14 formed on the metal base. Then, on the hydrophilic film 14 of the cathode collector, there is formed a low-density cathode active material layer 20 with a density in an uncompressed state (not subjected to a pressing treatment) of 0.9 g/cm³ to 1.5 g/cm³.

With the battery cathode 30 in accordance with the present embodiment, on the metal base (aluminum foil) 12 forming the main body portion of the cathode collector, the hydrophilic film 14 is formed. On the hydrophilic film 14, the cathode active material layer 20 is formed. This can make good the adhesion (junction strength) between the cathode active material layer 20 and the cathode collector 10. Further, on the hydrophilic film 14 of the cathode collector, the uncompressed cathode active material layer 20 is formed. Such an uncompressed cathode active material layer 20 has a lower density, and more pores 26 in the cathode active material layer 20 as compared with the cathode active material layer in a state subjected to a pressing treatment, and compressed. Accordingly, the electrolytic solution sufficiently permeates into every corner of the cathode active material layer. For this reason, it is possible to suppress the reduction of the usage rate of the cathode active material 22 due to the insufficient permeation of the electrolytic solution, and to improve the battery capacity. Further, it is possible to suppress an increase in transfer / diffusion resistance of lithium ions due to the insufficient permeation of the electrolytic solution, and to improve the high-rate discharging performance.

The density of the uncompressed cathode active material layer may be desirably set at about 0.9 g/cm³ to 1.5 g/cm³. When the density of the cathode active material layer is too large, the pores 26 in the cathode active material layer are reduced, and the permeability of the electrolytic solution into the cathode active material layer is reduced. These may cause the capacity deterioration of the battery, and the like. Further, the reduction of the electrolytic solution permeability inhibits the transfer / diffusion of lithium ions during rapid charging and discharging. Accordingly, the high-rate discharging performance may be reduced. On the other hand, when the density of the cathode active material layer is too small, the filling density of the cathode active material contained in the cathode active material layer is reduced. Accordingly, the energy density of the battery formed using the cathode may tend to be reduced. Therefore, the density of the cathode active material layer is roughly about 0.9 g/cm³ to 1.5 g/cm³, and is more preferably set at, for example, about 0.9 g/cm³ to 1.3 g/cm³.

The cathode active material layer having a density satisfying the proper range can be implemented by, for example, properly selecting the material and properties of the cathode active material. For example, the material and the particle diameter size (mean particle diameter or particle diameter distribution) of the cathode active material particles, the powder tap density, and the like are properly selected. As a result, it is possible to manufacture a cathode having a cathode active material layer with an uncompressed density satisfying 0.9 g/cm³ to 1.5 g/cm³. Other than this, as the method for adjusting the uncompressed density within a proper range, mention may be made of a method in which the active material paste composition, and the like are properly selected. For example, the amount of the conductive material and/or a binder contained in the active material paste is properly selected. As a result, it is possible to manufacture a cathode including a cathode active material layer with an uncompressed density satisfying 0.9 g/cm³ to 1.5 g/cm³. The methods for adjusting the uncompressed density described above may be respectively used alone, or may be used in appropriate combination thereof.

Incidentally, whether the cathode active material layer was subjected to compression (pressing) or not can be confirmed by, for example, measuring the surface roughness (Ra) of the cathode active material layer. For example, the fact that the cathode active material layer herein disclosed is an uncompressed cathode active material layer can be confirmed by the following fact: the surface roughness (Ra) of the cathode active material layer is 3 µm or more (e.g., 3 µm to 5 µm or more, for example, about 5 µm to 10 µm). The surface roughness (Ra) may be grasped by the cross-sectional image analysis of the cathode active material layer by, for example, a scanning electron microscope (SEM).

Further, in the configuration of the present embodiment, on the surface of the metal base (aluminum foil) 12, the oxide film 13 of the metal is previously formed. Thus, there is included a step of removing the metal oxide film 13 formed on the surface of the metal base prior to the step of forming the hydrophilic film 14. When on the surface of the metal base, the metal oxide film 13 is present, the resistance between the metal base 12 and the hydrophilic film 14 increases. This may impair the conductivity between the metal base 12 and the hydrophilic film 14. In contrast, in the present embodiment, the metal oxide film 13 formed on the metal base 12 is removed to expose the metal surface of the underlayer. Thereafter, on the exposed solid metal base 12, the hydrophilic film 14 is formed in a direct contact manner. This can make good the conductivity between the metal base 12 and the hydrophilic film 14 than in the case where the metal oxide film 13 is interposed therebetween.

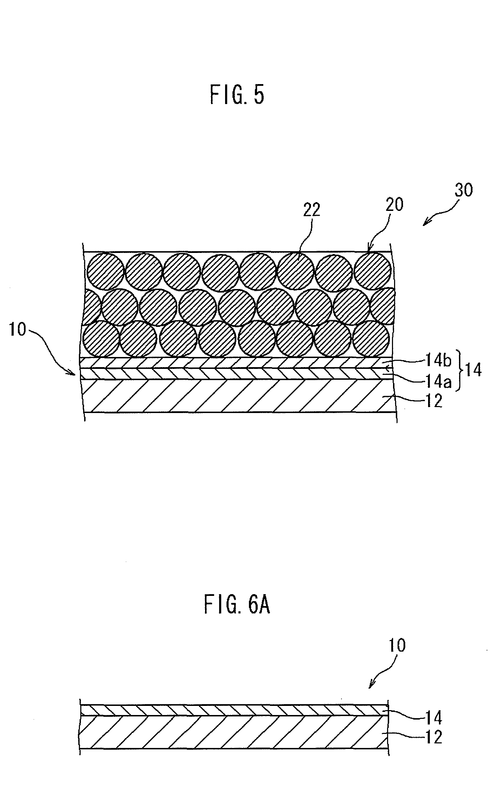

Subsequently, referring to FIG. 5, a description will be given to a modified example of a cathode 30 in accordance with the present embodiment. In this example, the hydrophilic film 14 is formed of a first hydrophilic film 14a formed on the metal base 12, and a second hydrophilic film 14b formed on the first hydrophilic film 14a. In this case, the second hydrophilic film 14b is preferably a material having a higher conductivity than that of the first hydrophilic film 14a. For example, the first hydrophilic film 14a is formed of a carbide or an oxide of tungsten. The second hydrophilic film 14b is a hydrophilic film which is formed of carbon, and whose surface is hydrophilic. This can reduce the surface resistance of the cathode collector 10 (the resistance generated between it and the cathode active material layer 20), and can make favorable the conductivity between the cathode collector 10 and the cathode active material layer 20.

Further, the first hydrophilic film 14a is preferably a material exhibiting a greater adhesion (junction strength) with the metal base (e.g., aluminum foil) than that of the second hydrophilic film 14b. When on the metal base 12, the second hydrophilic film (e.g., carbon film) 14b is tried to be directly formed, the adhesion is low, which may not result in a sufficient junction strength. However, by interposing the first hydrophilic film (e.g., tungsten carbide film) 14a therebetween, it is possible to form the second hydrophilic film (e.g., carbon film) 14b in firm close contact with the top of the metal base 12. Incidentally, the thickness of the first hydrophilic film is, for example, about 10 nm to 100 nm. The thickness of the second hydrophilic film is, for example, about 1 nm to 100 nm.

Incidentally, the carbon film 14b as the second hydrophilic film is preferably a carbon film not containing at least non-conductive organic polymer material, and more preferably a carbon film substantially not containing an organic component. The film is in particular preferably a carbon film substantially formed of only carbon. The structure of such a carbon film has no particular restriction. For example, the structure may be, for example, either an amorphous or graphite structure, or a mixed structure thereof. The structure may be amorphous containing both of a diamond structure (SP³ bond) and a graphite structure (SP² bond) (typically, diamond-like carbon film). Further, if required, into the surface of the carbon film 14b, a hydrophilic functional group may be introduced. For example, as a hydrophilic functional group, a polar functional group containing a nitrogen atom may be introduced. As the polar functional groups containing a nitrogen atom, mention may be made of amido group, amino group, imide group, and the like. The introduction of the polar functional group containing a nitrogen atom is performed by supplying, for example, nitrogen-containing chemical species (such as nitrogen gas, nitrogen radical, or nitrogen plasma) to the surface of the carbon film. As a result, it is possible to more suitably hydrophilize the surface of the carbon film 14b.

Subsequently, in order to confirm that the formation of a hydrophilic film on the metal base (aluminum foil) improves the wettability of the cathode collector with respect to an active material paste, the following experiments were performed.

### <Test Example 1: manufacturing of cathode collector>

Namely, for a sample 1, as shown in FIG. 6A, as the metal base 12, there was prepared aluminum foil from which the surface oxide film had been removed. There was manufactured a cathode collector 10 in which a hydrophilic film (WC film) 14 with a thickness of about 50 nm, and formed of tungsten carbide was formed on one side of the aluminum foil. The formation of the hydrophilic film (WC film) was performed by performing sputtering using tungsten carbide as a target under conditions of an atmospheric pressure of 0.3 Pa and a sputtering electric power of 1.25 kW using a general sputtering device.

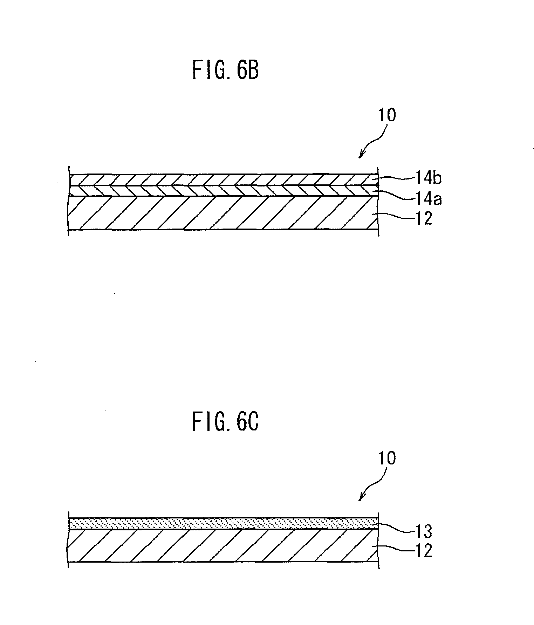

Whereas, for a sample 2, as shown in FIG. 6B, there was manufactured a cathode collector 10 in which on a first hydrophilic film (WC film) 14a formed in the same manner as with the sample 1, a second hydrophilic film (C film) 14b having a thickness of about 5 nm, and formed of carbon was formed. The formation of the second hydrophilic film (C film) 14b was performed by depositing carbon under conditions of an atmospheric pressure of 0.3 Pa, a bias voltage of 250 W, and a target current of 41 A using a general AIP (arc ion plating) device.

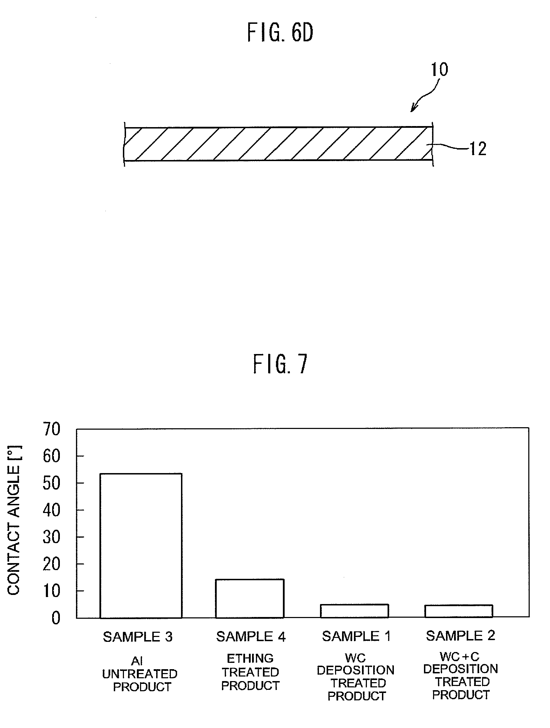

Furthermore, for a sample 3, as shown in FIG. 6C, aluminum foil (Al foil untreated product) 12 having a surface oxide film 13 of nano order was prepared as the cathode collector 10. Whereas, for a sample 4, as shown in FIG. 6D, the aluminum foil 12 from which the surface oxide film had been removed was prepared as the cathode collector 10.

### <Wettability test>

To each of the cathode collectors 10 of samples 1 to 4, a droplet of N-methyl pyrrolidone (NMP) was deposited as a solvent for the active material paste. The contact angle thereof was measured. The results are shown in FIG. 7 and Table 1.

As apparent from FIG. 7 and Table 1, each cathode collector of the samples 1 and 2 including the hydrophilic film (WC film or WC + C film) formed on the surface thereof exhibited a smaller contact angle than that of each cathode collector of the samples 3 and 4 not including a hydrophilic film formed on the surface thereof. The results indicate the following: by forming a hydrophilic film (WC film or WC + C film) on aluminum foil (metal base), the wettability of the cathode collector with respect to the active material paste is improved.

**[Table 1]**

| LiFePO₄ | Etching | WC | C | Wettability (contact angle) [°] | Pressing | Density [g/cm³] | Cathode resistance [mΩ] | 30-C capacity [mAh/g] |
|---|---|---|---|---|---|---|---|---|
| Sample 1 | Done | Done | Not done | 4.65 | None | 0.9 | 24 | 53.65 |
| Sample 2 | Done | Done | Done | 4.35 | None | 0.9 | 8.77 | 61.48 |
| Sample 3 | Not done | Not done | Not done | 53.4 | None | 0.9 | 418.25 | 1.29 |
| Sample 4 | Done | Not done | Not done | 14.3 | None | 0.9 | 59.5 | 49 |
| Sample 5 | Done | Done | Done | - | Performed | 1.3 | 4.71 | 36 |
| Sample 6 | Done | Done | Done | - | Performed | 1.5 | 3.42 | - |
| Sample 7 | Not done | Not done | Not done | - | Performed | 1.3 | 99.05 | 30.1 |
| Sample 8 | Not done | Not done | Not done | - | Performed | 1.5 | 103.76 | - |

### <Test Example 2: Manufacturing of cathode sheet>

Subsequently, using each cathode collector of the samples 1 to 4, a cathode sheet was manufactured. In the present example, there was formed a non-pressed uncompressed cathode active material layer. First, a LiFePO₄ powder (mean particle size 30 µm) as a cathode active material, carbon black as a conductive material, and polyvinylidene fluoride (PVdF) as a binder were mixed in N-methyl pyrrolidone (NMP) so that the mass ratio of the materials was 87 : 10 : 3, and so that the solid content concentration was about 42.9 mass%, thereby preparing an active material paste. The active material paste was coated in a band form on one side of the cathode collector, and was dried. As a result, there was manufactured a cathode sheet 30 in which an uncompressed cathode active material layer 20 (thickness about 135 µm) was disposed on one side of the cathode collector. The coating amount of the active material paste was adjusted so as to be about 4 mg/cm² (in terms of solid content) per one side. Whereas, the density of the uncompressed cathode active material layer was measured, and was found to be about 0.9 g/cm³.

Whereas, as samples 5 and 6, using the same cathode collector (WC + C deposition treated product) as that of the sample 2, cathode active material layers, however, which had been pressed, were formed. Specifically, in the order of the samples 5 and 6, pressing was performed so that the densities of the cathode active material layers were 1.3 g/cm³ and 1.5 g/cm³, respectively. As a result, cathode sheets were manufactured. Whereas, as samples 7 and 8, using the same cathode collector (untreated Al foil) as that of the sample 3, cathode active material layers, however, which had been pressed, were formed. Specifically, in the order of the samples 7 and 8, pressing was performed so that the densities of the cathode active material layers were 1.3 g/cm³ and 1.5 g/cm³, respectively. As a result, cathode sheets were manufactured.

### <Measurement of resistance value of cathode sheet>

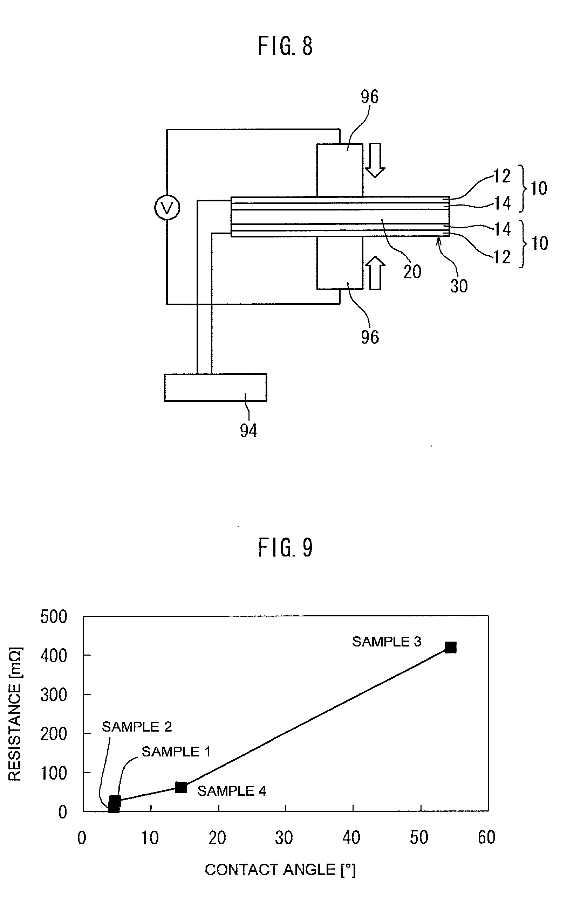

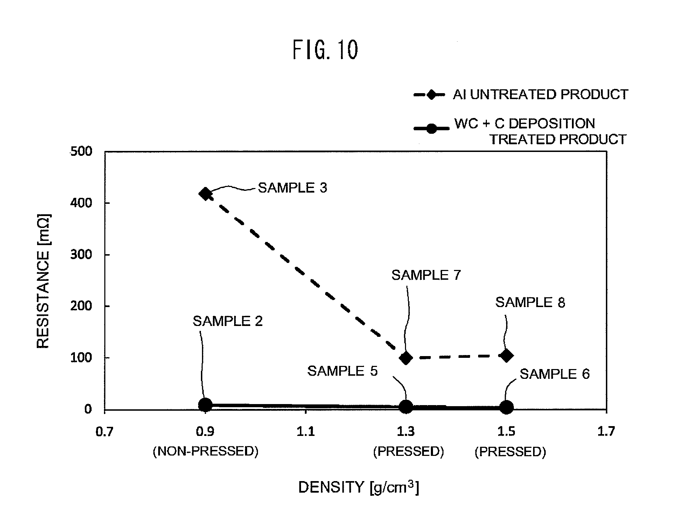

The electric resistance values of the cathode sheets of the samples 1 to 8 obtained in this manner were measured. The measurement of the electric resistance values was performed using the device shown in FIG. 8. As shown in FIG. 8, on the cathode active material layer 20 of the cathode sheet 30, another sheet of the cathode collector 10 was stacked so that the hydrophilic film 14 of the cathode collector and the cathode active material layer 20 were in contact with each other. Then, the cathode sheet was sandwiched between a pair of voltage measuring terminals 96. Thus, from the changes in voltage when a current was passed from the current applying device 94 while applying a load of 25 kg/cm² from above and below the voltage measuring terminals 96, the electric resistance value (mΩ) of the cathode sheet 30 was measured. The results are shown in Table 1 and FIGS. 9 and 10. FIG. 9 is a characteristic view showing the relationship between the contact angle and the electric resistance value obtained in the wettability test. FIG. 10 shows the relationship between the density and the electric resistance value of the cathode active material layer.

As shown in FIG. 9 and Table 1, for each cathode sheet of the samples 1 and 2 in each of which on the cathode collector, a hydrophilic film (WC film or WC + C film) was formed, the electric resistance value was largely reduced as compared with the cathode sheets of the samples 1 and 2 in each of which on the cathode collector, a hydrophilic film was not formed. The reason for this can be considered as follows: for the samples 1 and 2, the presence of the hydrophilic film enhanced the wettability of the cathode collector with respect to the active material paste; accordingly, the adhesion (junction strength) between the cathode collector and the cathode active material layer was improved; thus, the interface resistance between the cathode collector and the cathode active material layer was reduced as compared with the samples 1 and 2.

Further, as shown in FIG. 10, when on the cathode collector, the hydrophilic film was not formed, the electric resistance value largely changed according to whether pressing had been performed or not. Particularly, for the sample 3 not including a hydrophilic film formed therein, and not subjected to pressing, the electric resistance value largely increased as compared with the samples 7 and 8 each not including a hydrophilic film formed therein, and subjected to pressing. In contrast, the sample 2 including the hydrophilic film formed therein and not subjected to pressing was compared with the samples 5 and 6 each including the hydrophilic film formed therein, and subjected to pressing. As a result, the electric resistance value was a value as low as 10 mΩ or less regardless of whether pressing had been performed or not. This has showed the following: by forming a hydrophilic film on the cathode collector, the adhesion between the cathode collector and the cathode active material layer becomes favorable even when a pressing treatment is not performed; this can reduce the interface resistance between the cathode collector and the cathode active material layer.

### <Test Example 3: Formation of lithium secondary battery>

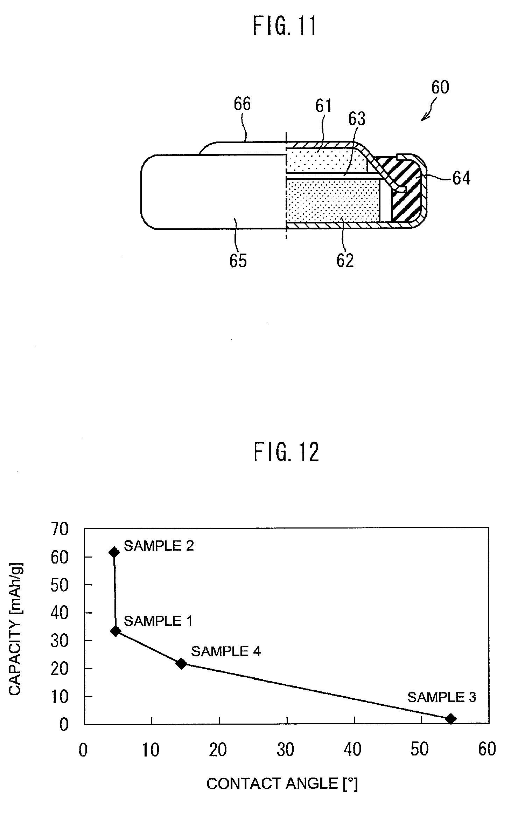

Subsequently, using the cathode sheets of the samples 1 to 5, and 7, lithium secondary batteries were formed. Specifically, each cathode sheet was stamped in a circle with a diameter of 16 mm to manufacture a cathode. Metal lithium (metal Li foil with a diameter of 19 mm, and a thickness of 0.02 mm was used.) as the cathode (working electrode) and the anode (counter electrode), and a separator (a porous polypropylene sheet with a diameter of 22 mm, and a thickness of 0.02 mm was used.) were incorporated with a non-aqueous electrolytic solution into a container made of stainless steel. This resulted in the construction of a coin cell 60 (half cell for charging and discharging performance evaluation) with a diameter of 20 mm and a thickness of 3.2 mm (2032 model) shown in FIG. 11. In FIG. 11, a reference numeral 61 represents a cathode (working electrode); a reference numeral 62, an anode (counter electrode); a reference numeral 63, a separator impregnated with an electrolytic solution; a reference numeral 64, a gasket; a reference numeral 65, a container (anode terminal); and a reference numeral 66, a lid (cathode terminal). Incidentally, as the non-aqueous electrolytic solution, there was used the one obtained by allowing a mixed solvent containing ethylene carbonate (EC), dimethyl carbonate (DMC), and ethyl methyl carbonate (EMC) in a volume ratio of 3 : 4 : 3 to contain LiPF₆ as a supporting salt in a concentration of about 1 mol/liter. Subsequently, an initial charging and discharging treatment (conditioning) was performed by an ordinary method, resulting in a lithium secondary battery for test.

### <Charging and discharging test>

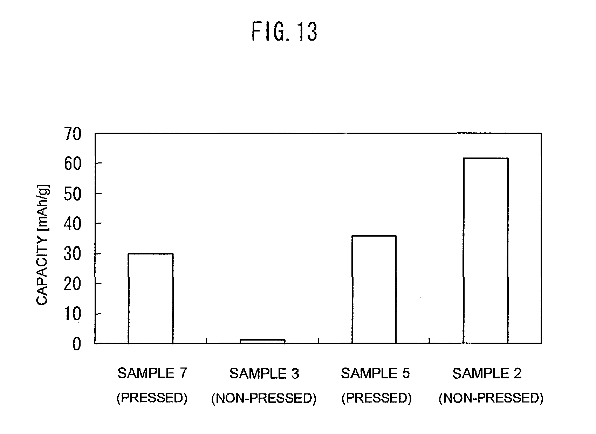

A high rate charging and discharging test was performed on each of the lithium secondary batteries for test of respective examples obtained in the foregoing manner. Specifically, each lithium secondary battery for test was charged with a constant current of 0.3 C until the inter-terminal voltage became 4.1 V under the temperature conditions of 25°C. Subsequently, charging was performed with a constant current until the total charging time became 4 hours. Such a battery after CC-CV charging was discharged with a constant current of 30 C until the inter-terminal voltage became 2.5 V under the temperature conditions of 25°C. Then, the discharging capacity at 30 C was measured. The results are shown in Table 1 and FIGS. 12 and 13. FIG. 12 is a characteristic view showing the relationship between the contact angle and the discharging capacity obtained in the wettability test. FIG. 13 shows the discharging capacities of the samples 2, 3, 5, and 7.

As shown in FIG. 12 and Table 1, for each test battery of the sample 1 or 2 in which the hydrophilic film (WC film or WC + C film) was formed, the charging capacity was largely improved as compared with each test battery of the sample 3 or 4 in which a hydrophilic film was not formed. The reason for this can be considered as follows: with the samples 1 and 2, the presence of the hydrophilic film enhanced the wettability of the cathode collector with respect to the active material paste; this resulted in the reduction of the interface resistance between the cathode collector and the cathode active material layer; accordingly, the discharging capacity improved as compared with the samples 3 and 4.

Further, as shown in FIG. 13, when the hydrophilic film is not formed, the discharging capacity largely changed according to whether pressing was performed or not. Particularly, for the sample 3 not including a hydrophilic film formed therein, and not subjected to pressing, the discharging capacity was largely reduced as compared with the sample 7 not including a hydrophilic film formed therein, and subjected to pressing. In contrast, the sample 2 including a hydrophilic film formed therein, and not subjected to pressing is compared with the sample 5 including a hydrophilic film formed therein, and subjected to pressing. This indicates that the sample 2 not subjected pressing was largely improved in discharging capacity as compared with the sample 5 subjected to pressing. The reason for this can be considered as follows: for the sample 2, a pressing treatment was not performed, so that the pores in the uncompressed cathode active material layer increased; this resulted in the improvement of the electrolytic solution permeability, which led to an increase in usage rate of the cathode active material; accordingly, the discharging capacity improved as compared with the sample 5. The results have shown the following: in order to enhance the discharging capacity (particularly, the high-rate discharging capacity), it is useful that on aluminum foil, a hydrophilic film is formed, and that an uncompressed low-density cathode active material layer is formed without performing a pressing treatment.

Further, for the samples 9 to 11, by changing the cathode active material to LiNi_{1/3}Co_{1/3}Mn_{1/3}O₂, a cathode sheet was manufactured. Specifically, a LiNi_{1/3}Co_{1/3}Mn_{1/3}O₂ powder as a cathode active material, carbon black as a conductive material, and polyvinylidene fluoride (PVdF) as a binder were mixed in N-methyl pyrrolidone (NMP) so that the mass ratio of the materials was 87 : 10 : 3, thereby preparing an active material paste. The active material paste was coated in a band form on one side of the cathode collector, and was dried. As a result, there was manufactured a cathode sheet 30 in which an uncompressed cathode active material layer 20 (thickness about 135 µm) was disposed on one side of the cathode collector. The coating amount of the active material paste was adjusted so as to be about 8 mg/cm² (in terms of solid content) per one side.
For the sample 9, using the same cathode collector (WC + C deposition treated product) as that of the sample 2, an uncompressed cathode active material layer was formed. Whereas, for the sample 10, using the same cathode collector (Al untreated product) as that of the sample 3, an uncompressed cathode active material layer was formed. The density of the uncompressed cathode active material layer was measured, and found to be about 1.5 g/cm³. Whereas, for the sample 11, using the same cathode collector (Al untreated product) as that of the sample 3, there was formed a cathode active material layer subjected to a pressing treatment. The density of the cathode active material layer after the pressing treatment was measured, and found to be about 2.0 g/cm³. The electric resistance values of the cathode sheets of the resulting samples 9 to 11 were measured with the same method as that for the samples 1 to 8. Further, using the cathode sheets of the samples 9 to 11, the test batteries were constructed with the same method as that for the samples 1 to 8. Thus, the 30-C discharging capacity was measured. The results are shown in Table 2.

**[Table 2]**

| LiNi_{1/3}Co_{1/3}Mn_{1/3}O₂ | Etching | WC | C | Pressing | Density [g/cm³] | Cathode resistance [mΩ] | 30-C capacity [mAh/g] |
|---|---|---|---|---|---|---|---|
| Sample 9 | Done | Done | Done | None | 1.5 | 29.07 | 108.3 |
| Sample 10 | Not done | Not done | Not done | None | 1.5 | 61.2 | 10.95 |
| Sample 11 | Not done | Not done | Not done | Performed | 2.0 | 32.19 | 27.26 |

As apparent from Table 2, even when LiNi_{1/3}Co_{1/3}Mn_{1/3}O₂ was used as the cathode active material, for the test battery of the sample 9 including the hydrophilic film (WC + C film) formed therein, and not subjected to pressing, the 30-C discharging capacity was largely improved as compared with the test battery of the sample 11 not including a hydrophilic film formed therein, and subjected to pressing. This has shown the following: in order to enhance the discharging capacity, it is useful that on aluminum foil, a hydrophilic film is formed, and that an uncompressed low-density cathode active material layer is formed without performing a pressing treatment. Whereas, the results of the samples 1 to 11 have showed the following: in order to enhance the discharging capacity (particularly, the high-rate discharging capacity), it is preferable to form a cathode active material layer with an uncompressed density included within the range of 0.9 g/cm³ to 1.5 g/cm³.

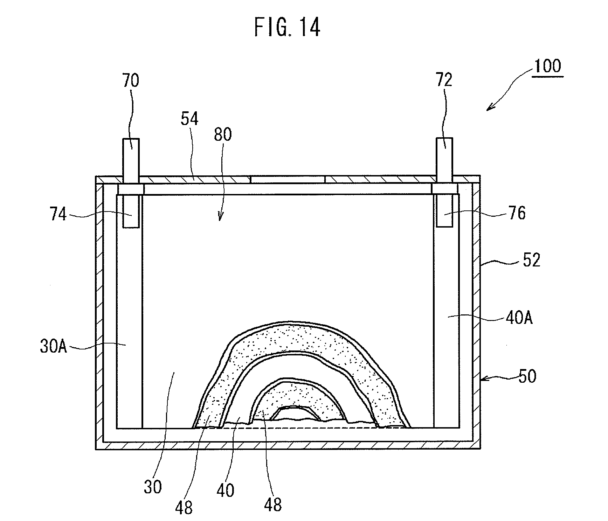

Below, one embodiment of a lithium secondary battery formed using the cathode (cathode sheet) 30 manufactured by applying the foregoing method thereto will be described by reference to the schematic view shown in FIG. 14.

As shown, the lithium secondary battery 100 in accordance with the present embodiment has the following configuration: an electrode body (wound electrode body) 80 in a form in which a long-length cathode sheet 30 and a long-length anode sheet 40 are wound in a flat form via long-length separators 48 therebetween is accommodated together with a non-aqueous electrolytic solution not shown in a container 50 in a shape (box shape) capable of accommodating the wound electrode body 80.

The container 50 includes a bottomed container main body 52 with the top end opened, and a lid body 54 for blocking the opening thereof. As the materials forming the container 50, there are preferably used metal materials such as aluminum, steel, and Ni-plated SUS (in the present embodiment, Ni-plated SUS). Alternatively, the container 50 obtained by forming a resin material such as polyphenylene sulfide (PPS) or polyimide resin is also acceptable. At the top surface of the container 50 (i.e., the lid body 54), there are disposed a cathode terminal 70 to be electrically connected with the cathode 30 of the wound electrode body 80, and an anode terminal 72 to be electrically connected with an anode 40 thereof. In the inside of the container 50, the wound electrode body 80 is accommodated together with a non-aqueous electrolytic solution not shown.

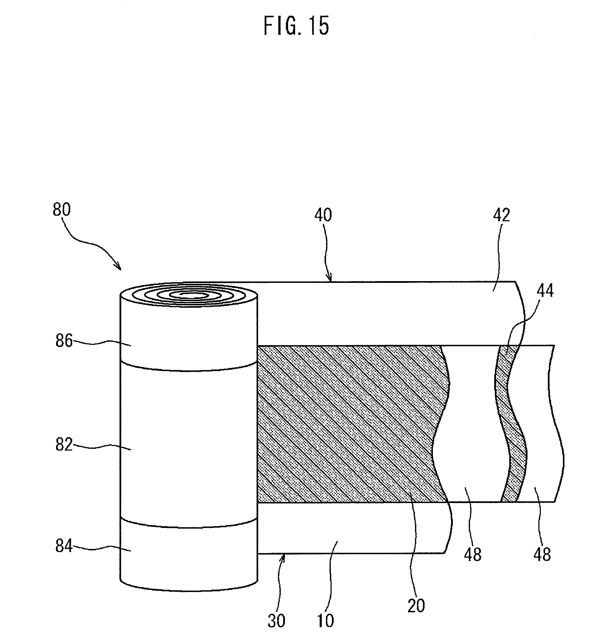

The wound electrode body 80 in accordance with the present embodiment is equal to the wound electrode body of a general lithium secondary battery except for the configuration of the cathode sheet 30. As shown in FIG. 15, it has a long-length (band-like) sheet structure at the stage prior to assembly of the wound electrode body 80.

The cathode sheet 30 includes, as described above, a cathode collector 10 having hydrophilic films (e.g., tungsten carbide layers) 14 (FIG. 4) on both sides of a base 12 (FIG. 4) formed of aluminum foil, and cathode active material layers 20 formed on both sides of the collector 10, and containing a cathode active material as a main component. However, the cathode active material layer 20 is not deposited on one side edge (in the drawing, a bottom-side side edge portion) along the end side in the width direction of the cathode sheet 30. Accordingly, there is formed a cathode active material layer non-formation part at which the cathode collector 10 is exposed with a given width.

The anode sheet 40 has a structure in which anode active material layers 44 containing an anode active material are held by both sides of an anode collector 42 in a long-length sheet-like foil state. However, the anode active material layer 44 is not deposited on one side edge (in the drawing, a bottom-side side edge portion) along the end side in the width direction of the anode sheet 40. Accordingly, there is formed a cathode active material layer non-formation part at which the anode collector 42 is exposed with a given width.

For manufacturing the wound electrode body 80, the cathode sheet 30 and the anode sheet 40 are stacked via the separator sheets 48. At this step, the cathode sheet 30 and the anode sheet 40 are stacked in relation slightly deviated from each other in the width direction so that the cathode active material layer non-formation part of the cathode sheet 30 and the anode active material layer non-formation part of the anode sheet 40 protrude from both sides in the width direction of the separator sheets 48, respectively. By winding the lamination body stacked in this manner, it is possible to manufacture the wound electrode body 80.

At the central portion in the direction of the winding shaft of the wound electrode body 80, a winding core portion 82 (i.e., the densely stacked portion of the cathode active material layer 20 of the cathode sheet 30, the anode active material layer 64 of the anode sheet 40, and the separator sheets 48) is formed. Whereas, at opposite ends in the direction of the winding shaft of the wound electrode body 80, the electrode active material layer non-formation parts of the cathode sheet 30 and the anode sheet 40 permeate from the winding core portion 82 outwardly, respectively. To such a cathode side protruding portion (i.e., the non-formation part of the cathode active material layer 20) 84 and an anode side protruding portion (i.e., the non-formation part of the anode active material layer 44) 86, a cathode lead terminal 74 and an anode lead terminal 76 are attached, respectively, and are electrically connected with the cathode terminal 70 and the anode terminal 72, respectively.

The components forming such a wound electrode body 80 may be the same as those of the wound electrode body of a conventional lithium secondary battery except for the cathode sheet 30, and have no particular restriction. For example, the anode sheet 40 can be formed by applying the anode active material layer 44 containing the anode active material for a lithium secondary battery as a main component on the long-length anode collector 42. For the anode collector 42, there is preferably used metal foil suitable for the anode such as copper foil. As the anode active materials, there can be used one, or two or more of the substances conventionally for use in a lithium secondary battery without particular restriction. For example, mention may be made of carbon type materials such as graphite carbon and amorphous carbon, lithium-containing transition metal oxides, and transition metal nitrides. As the preferable objects to which the technology herein disclosed is applied, there are exemplified anode active materials containing carbon type materials such as graphite carbon and amorphous carbon as main components.

As preferable examples of the separator sheet 48 to be used between the cathode and anode sheets 30 and 40, mention may be made of those formed of porous polyolefine type resins. For example, there may be preferably used a porous separator sheet made of synthetic resin (e.g., made of polyolefine such as polyethylene).

Then, from the top end opening of the container main body 52 into the main body 52, the wound electrode body 80 is accommodated. In addition, an electrolytic solution containing a proper electrolyte is disposed (injected) in the container main body 52. The electrolyte is, for example, a lithium salt such as LiPF₆. For example, there can be used a non-aqueous electrolytic solution obtained by dissolving a proper amount (e.g., 1 M in concentration) of lithium salt such as LiPF₆ in a mixed solvent of diethyl carbonate and ethylene carbonate (e.g., mass ratio 1 : 1).

Then, the opening is sealed by welding with the lid body 54, or the like. This results in the completion of assembly of the lithium secondary battery 100 in accordance with the present embodiment. The sealing process of the container 50, and the disposition (injection) process of the electrolyte may be the same as the method performed in manufacturing of a conventional lithium secondary battery, and do not characterize the present invention. The construction of the lithium secondary battery 100 in accordance with the present embodiment is completed in this manner.

The lithium secondary battery 100 constructed in this manner is, as described above, constructed using the cathode 30 including the active material layer 20 high in permeability of the electrolytic solution, and good in adhesion with the cathode collector 10, and thereby exhibits excellent battery performances. For example, by constructing a battery using the cathode 30, it is possible to provide the lithium secondary battery 100 which satisfies at least one of being high in battery capacity, being excellent in high-rate output characteristics, being high in cycle durability, and being good in productivity.

### Industrial Applicability

In accordance with the present invention, it is possible to provide a battery cathode including an active material layer high in permeability of the electrolytic solution, and good in adhesion to the cathode collector.

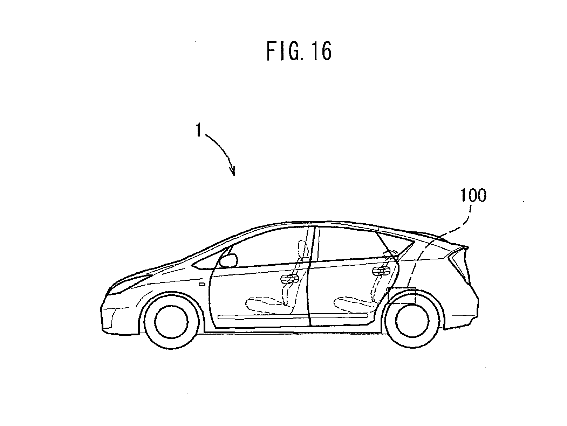

Incidentally, any lithium secondary battery 100 herein disclosed can have performances suitable as a battery to be mounted in a vehicle (e.g., capable of providing high capacity at high rate). Therefore, in accordance with the present invention, as shown in FIG. 16, there is provided a vehicle 1 including any lithium secondary battery 100 herein disclosed. Particularly, there is disclosed a vehicle (e.g., car) including the lithium secondary battery 100 as a power source (typically, a power source of a hybrid vehicle or an electric vehicle).

## Claims

1. A battery cathode having a structure in which a cathode active material layer containing a cathode active material is held on a cathode collector,
the cathode collector, having:
a metal base forming a main body portion of the cathode collector; and
a film formed on a surface of the metal base, and having greater hydrophilicity than that of the metal base surface, the film being a hydrophilic film formed of a carbide or an oxide including at least one selected from the group consisting of tungsten, tantalum, hafnium, niobium, molybdenum, and vanadium as a constituent element, or a hydrophilic film formed of carbon, and having a hydrophilic surface,
wherein on the hydrophilic film of the cathode collector, a cathode active material layer having an uncompressed density of 0.9 g/cm³ to 1.5 g/cm³ is formed.

2. The battery cathode according to claim 1, wherein a surface roughness (Ra) of the cathode active material layer is 3 µm or more.

3. The battery cathode according to claim 1 or 2, wherein the cathode active material layer is formed by coating of an active material paste containing a polar solvent and drying the same.

4. The battery cathode according to any one of claims 1 to 3, wherein the hydrophilic film is formed of a first hydrophilic film formed on the metal base, and a second hydrophilic film formed on the first hydrophilic film.

5. The battery cathode according to claim 4, wherein the first hydrophilic film is formed of a material exhibiting greater adhesion to the metal base than the second hydrophilic film, and the second hydrophilic film is formed of a material exhibiting higher conductivity than the first hydrophilic film.

6. The battery cathode according to claim 4 or 5, wherein the first hydrophilic film is formed of a carbide or an oxide of tungsten, and the second hydrophilic film is formed of carbon, and has a hydrophilic surface.

7. The battery cathode according to any one of claims 1 to 6, wherein the metal base included in the cathode collector is formed of aluminum or aluminum alloy.

8. The battery cathode according to any one of claims 1 to 7, wherein the cathode active material is a polyanion type compound represented by the following general formula:
LiMAO₄ (1)
where M in the formula is one, or two or more elements including at least one metal element selected from the group consisting of Fe, Co, Ni, and Mn, and A in the formula is one, or two or more elements selected from the group consisting of P, Si, S, and V.

9. A battery comprising: an electrode body having the battery cathode according to any one of claims 1 to 8; and an electrolytic solution containing Li ions.

10. A vehicle comprising the battery according to claim 9 mounted therein.

11. A method for manufacturing a battery cathode having a structure in which a cathode active material layer containing a cathode active material is held on a cathode collector, the cathode collector, having:
a metal base forming a main body portion of the cathode collector; and
a film formed on a surface of the metal base, and having greater hydrophilicity than that of the metal base surface, the film being a hydrophilic film formed of a carbide or an oxide including at least one selected from the group consisting of tungsten, tantalum, hafnium, niobium, molybdenum, and vanadium as a constituent element, or a hydrophilic film formed of carbon, and having a hydrophilic surface,
the method, comprising:
a step of forming the hydrophilic film on a surface of the metal base; and
a step of coating an active material paste containing a polar solvent on the hydrophilic film of the cathode collector and drying the same, thereby to form a cathode active material layer having an uncompressed density of 0.9 g/cm³ to 1.5 g/cm³.

12. The method for manufacturing a cathode according to claim 11,
an oxide film of the metal being previously formed on a surface of the metal base,
the method further comprising a step of removing the metal oxide film formed on the surface of the metal base prior to the step of forming the hydrophilic film.

13. The method for manufacturing a cathode according to claim 12, wherein the metal oxide film is removed by physical etching.

14. The method for manufacturing a cathode according to any one of claims 9 to 13, wherein the hydrophilic film is formed by physical vapor deposition or chemical vapor deposition.

15. The method for manufacturing a cathode according to any one of claims 11 to 14, wherein the step of forming the hydrophilic film includes a treatment of forming a first hydrophilic film on the metal base, and a treatment of forming a second hydrophilic film on the first hydrophilic film.

16. The method for manufacturing a cathode according to claim 15, wherein as the first hydrophilic film, a hydrophilic film formed of a carbide or an oxide of tungsten is formed, and as the second hydrophilic film, a hydrophilic film formed of carbon and having a hydrophilic surface is formed.

17. The method for manufacturing a cathode according to any one of claims 11 to 16, wherein as the metal base, aluminum or aluminum alloy is used.
